# EUROPÄISCHE PATENTSCHRIFT

(11) **EP 1 692 880 B1**
(45) Veröffentlichungstag und Bekanntmachung des Hinweises auf die Patenterteilung: **01.04.2015**
(21) Anmeldenummer: 04766622.7
(22) Anmeldetag: 27.08.2004
(51) Int. Cl.: H04Q 3/00, H04L 12/26, H04B 1/74, H04L 1/22

(54) **VERFAHREN ZUM ERSATZSCHALTEN VON R UMLICH GETRENNTEN VERMITT LUNGSSYSTEMEN**
METHOD FOR SUBSTITUTE SWITCHING OF SPATIALLY SEPARATED SWITCHING SYSTEMS
PROCEDE DE COMMUTATION AUXILIAIRE DE SYSTEMES DE TRANSMISSION SPATIALEMENT SEPARES

(30) Priorität: 12.12.2003 DE 10358338
(43) Veröffentlichungstag der Anmeldung: 23.08.2006
(73) Patentinhaber: Nokia Solutions and Networks GmbH & Co. KG, 81541 Munich (DE)
(72) Erfinder: LÖBIG, Norbert, 64291 Darmstadt (DE); TEGELER, Jürgen, 82377 Penzberg (DE)
(74) Vertreter: Weidel, Gottfried
(86) Internationale Anmeldenummer: PCT/EP2004/051937
(87) Internationale Veröffentlichungsnummer: WO 2005/057951

(56) Entgegenhaltungen:
- DE-A- 3 235 661
- US-A1- 2002 152 320
- US-A1- 2002 188 713
- DATABASE WPI Section EI, Week 200236 Derwent Publications Ltd., London, GB; Class W02, AN 2002-316315 XP002309764 & CN 1 321 004 A (HUAWEI TECH CO LTD) 7. November 2001 (2001-11-07)
- ARDON M T ET AL: "PROVIDING ULTRA-RELIABLE SERVICES USING DISTRIBUTED SWITCH ARCHITECTURES" PROCEEDINGS OF THE XIV INTERNATIONAL SWITCHING SYMPOSIUM, YOKOHAMA, JAPAN, Bd. 1, 25. Oktober 1992 (1992-10-25), Seiten 169-173, XP000337637
- CUERVO F ET AL: "Megaco Protocol Version 1.0", IETF RFC3015.TXT, November 2000 (2000-11), XP015008798,

## Beschreibung

Zeitgemäße Vermittlungssysteme (Switch) verfügen durch redundantes Bereitstellung wichtiger interner Komponenten über ein hohes Maß an interner Betriebssicherheit. Damit wird im Normalbetrieb eine sehr hohe Verfügbarkeit der vermittlungstechnischen Funktionen erreicht. Treten jedoch massive äußere Einwirkungen auf (z.B. Feuer, Naturkatastrophen, Terroranschläge, kriegerische Einwirkungen etc.), so nutzen die getroffenen Vorkehrungen zur Erhöhung der Betriebssicherheit in der Regel wenig, weil Original- und Ersatzkomponenten des Vermittlungssystems sich am gleichen Ort befinden und damit in einem solchen Katästrophenfall mit hoher Wahrscheinlichkeit beide Komponenten zerstört bzw. funktionsunfähig geworden sind.

Aus der Druckschrift US 2002/152320 A1 (LAU P L), 17. Oktober 2002 (2002-10-17), sind ein System und ein Verfahren bekannt für schnelles Umschalten zwischen redundanten Netzen, welche eine primäre Netzsteuerung umfassen, eine Mehrzahl von Netzgeräten, welche mit der primären Netzsteuerung durch einen primären Netzpfad verbunden sind, und zumindest einen vorbestimmten Ersatznetzpfad. Wenn der primäre Netzpfad aktiv ist, blockiert die Netzsteuerung die vorbestimmten Ersatznetzpfade. Wenn der primäre Netzpfad jedoch ausfällt, blockiert die primäre Netzsteuerung den ausgefallenen primären Netzpfad und schaltet um auf einen der vorbestimmten Ersatznetzpfade.

Aus der Druckschrift Database WPI Section EI, Week 200236 Thomson Scientific, London, GB; Class WO2, AN 2002-316315 & CN 1 321 004 A (HUAWEI TECH CO LTD) 7. November 2001 (2001-11-07), sind ein Verfahren und eine Vorrichtung zum Umschal ten zwischen Host und Standby Switches bekannt. Es sind ein Host Main Control Board und ein Standby Main Control Board und ein Host Network Switch Board und ein Standby Network Switch Board vorhanden. Zwei MainControlBoards sind gegenseitig Realzeit kommuniziert, und sie haben gleiche Daten, um hot standby zu implementieren. Ihr Umschalten ist in gegenseitigem Überwachungs- und Steuerungsmodus. Zwei Network Switch Boards laufen synchron für hot standby. Vorteile sind schnelles und sicheres Umschalten.

Die Druckschrift ARDON M ET Al:"PROVIDING ULTRA-RELIABLE SERVICES USING DISTRIBUTED SWITCH ARCHITECTURES" Proceedings of the XIV INTERNATIONAL SWITCHING SYMPOSIUM, YOKOHAMA, JAPAN, Bd. 1, 25. Oktober 1992 (1992-10-25), Seiten 169-173, untersucht verschiedene ultra-zuverlässige Diensttechniken. Die Bedürfnisse von Kunden und Dienstanbieter auf dem Gebiet von ultra-zuverlässigen Diensten werden beschrieben und klassifiziert. Dienstschutztechniken werden diskutiert, welche digitale abgesetzte Einrichtungen mit und ohne autonome Vermittlungsfähigkeit nutzen. Schlüsselplattformen und Architekturelemente werden untersucht, welche beteiligt sind, Kundenzuverlässigkeitsbedürfnisse zu befriedigen.

Aus der Druckschrift US 2002/188713 A1 (BLOCH J ET AL) 12. Dezember 2002 (2002-12-12) ist ein vermittlungstechnisches Verfahren bekannt, bei dem Steuerungssignale über ein local area network von einer zentralen Steuerung zu jedem Prozessor einer Mehrzahl von dezentralen Prozessoren geleitet werden. Das Verfahren schließt auch ein, dass jeder Prozessor der Mehrzahl der dezentralen Prozessoren als Antwort auf die Steuerungssignale dezentralisierte vermittlungstechnische Funktionen ausführt.

Das Dokument CUERVO F ET AL: "Megaco Protocol Version 1.0" IETF RFC 3015 November 2000 (2000-11) definiert ein Protokoll, welches zwischen Elementen eines physikalisch zerlegten Multimedia Gateways genutzt wird. Die Protokolldefinition des Dokuments beruht auf einem mit der ITU-T Empfehlung H.248 gemeinsamen Text.

Als Lösung ist eine geographisch separierte 1:1 Redundanz vorgeschlagen worden. Demgemäss ist vorgesehen, jedem zu schützenden Vermittlungssystem einen identischen Klon als Redundanzpartner mit identischer Hardware, Software und Datenbasis zuzuordnen. Der Klon befindet sich im hochgefahrenen Zustand, ist aber trotzdem vermittlungstechnisch nicht aktiv. Beide Vermittlungssysteme werden von einem im Netz übergeordneten, realzeitfähigen Monitor gesteuert, der die Umschaltevorgänge steuert.

Der Erfindung liegt die Aufgabe zügrunde, ein Verfahren zum Ersatzschalten von Vermittlungssystemen anzugeben, das im Fehlerfall ein effizientes Umschalten eines ausgefallenen Vermittlungssystems auf einen Redundanzpartner sicherstellt.

Diese Aufgabe wird ausgehend von den im Oberbegriff von Patentanspruch 1 angegebenen Merkmalen durch die im kennzeichnenden Teil beanspruchten Merkmale gelöst.

Erfindungsgemäß wird im Zuge einer 1:1 Redundanz von einem übergeordneten Monitor - der in Hardware und/ oder Software realisiert werden kann - eine Kommunikation zu den paarweise angeordneten Vermittlungssystemen (1:1 Redundanz) aufgebaut. Bei Kommunikationsverlust zum aktiven Vermittlungssystem schaltet der Monitor mit Unterstützung der zentralen Steuerungen der beiden Vermittlungssysteme in Realzeit auf das redundante Vermittlungssystem um.

Ein wesentlicher Vorteil der Erfindung ist darin zu sehen, dass beim Umschaltevorgang von einem aktiven Vermittlungssystem auf ein hot-standby Vermittlungssystem keinerlei Netzwerkmanagement benötigt wird, das die Umschaltevorgänge unterstützt. Insofern ist es irrelevant, ob das Netz ein derartiges Netzwerkmanagement aufweist oder nicht. Ferner ist der Monitor über eine fest vorgegebene Anzahl von Interfaces (z. B. jeweils 2) mit den Vermittlungssystemen verbunden. Aus Sicht des Monitors stellt diese fest vorgegebene Anzahl von Interfaces Schnittstellen zu den betreffenden zentralen Steuerungen der Vermittlungssysteme dar. Damit ist der Monitor unabhängig vom Ausbauzustand der beiden Vermittlungssysteme.

Damit ist diese Lösung in jedem Vermittlungssystem mit IP basierten Schnittstellen mit minimalem Implementierungsaufwand realisierbar. Die Lösung ist umfassend einsetzbar und wirtschaftlich, weil im wesentlichen nur der Aufwand für den Monitor anfällt. Ferner ist sie durch Nutzung einfacher, standardisierter IP Protokolle extrem robust. Fehlsteuerung aufgrund von SW Fehlern können damit annähernd ausgeschlossen werden. Fehlsteuerungen aufgrund von temporären Ausfällen im IP core Netz beheben sich automatisch, nachdem der Ausfall beendet ist. Ein Doppelausfall des Monitors stellt ebenso kein Problem dar.

Vorteilhafte Weiterbildungen der Erfindungen sind in den Unteransprüchen angegeben.

Es zeigen:
- Figur 1: die Netzkonfiguration gemäss der Erfindung im Falle eines lokal redundanten Monitors
- Figur 2: die Netzkonfiguration gemäss der Erfindung im Falle eines geographisch redundanten Monitors

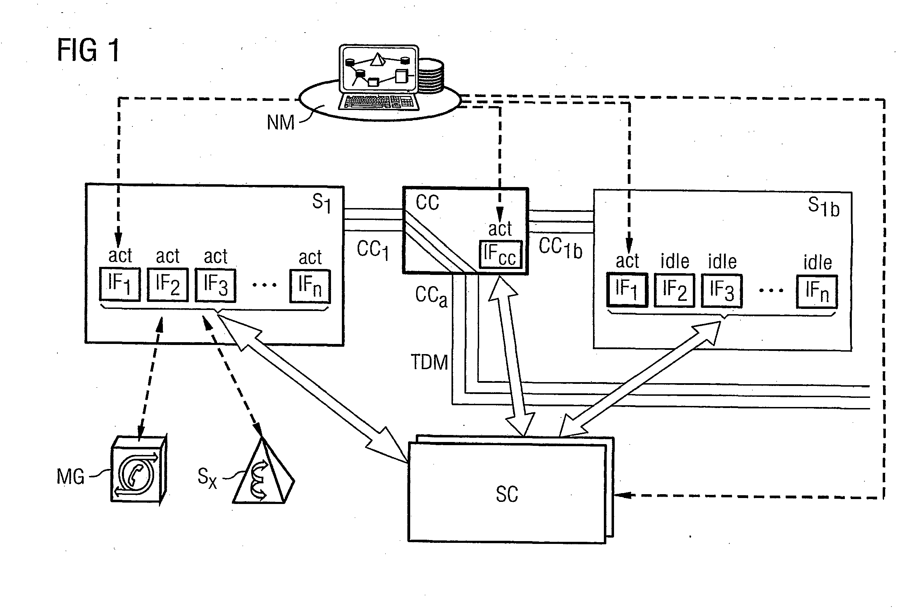

In Fig. 1 ist vorgesehen, jedem zu schützenden Vermittlungssystem (z. B. S₁) einen identischen Klon als Redundanzpartner (z. B. S_{1b}) mit identischer Hardware, Software und Datenbasis zuzuordnen. Der Klon befindet sich im hochgefahrenen Zustand, ist aber trotzdem vermittlungstechnisch nicht aktiv (Betriebszustand "hot standby"). Damit ist eine hochverfügbare, über mehrere Lokationen verteilte 1:1 Redundanz von Vermittlungssystemen definiert.

Die beiden Vermittlungssysteme (Vermittlungssystem S₁ und der Klon oder Redundanzpartner S_{1b}) werden von einem Netzwerkmanagementsystem NM gesteuert. Die Steuerung erfolgt derart, dass der aktuelle Stand von Datenbasis und Software beider Vermittlungssysteme S₁, S_{1b} identisch gehalten wird. Dies wird erreicht, indem jedes betriebstechnische Kommando, jedes Konfigurationskommando und jedes Software-Update inklusive Patches identisch an beide Partner ausgebracht wird. Damit wird ein räumlich abgesetzter, identischen Klon zu einem in Betrieb befindlichen Switch mit identischer Datenbasis und identischem Softwarestand definiert.

Die Datenbasis beinhaltet grundsätzlich alle semipermanenten und permanenten Daten. Hierbei werden unter permanenten Daten die Daten verstanden, die als Code in Tabellen abgelegt sind und die sich nur per Patch oder Software-Update ändern lassen. Unter semipermanenten Daten werden die Daten verstanden, die z. B. über die Bedienerschnittstelle in das System gelangen und die für längere Zeit dort in der Form der Eingabe gespeichert sind. Mit Ausnahme der Konfigurationszustände des Systems werden diese Daten i.a. vom System nicht selbst verändert. Nicht in der Datenbasis enthalten sind die einen Ruf begleitenden transienten Daten, die das Vermittlungssystem nur kurzzeitig speichert und die über die Dauer eines Calls hinaus i.a. keine Bedeutung haben oder Zustandsinformationen, die transiente Überlagerungen/ Ergänzungen von konfigurativ vorgegebenen Grundzuständen sind. (So könnte ein Port zwar im Grundzustand aktiv sein, aber wegen einer transienten (vorübergehenden) Störung momentan nicht zugreifbar sein.)

Im weiteren verfügen die Vermittlungssysteme S₁, S_{1b} beide über (in Fig. 1 nicht näher aufgezeigte) aktive, paketorientierte Interfaces zum gemeinsamen Netzwerkmanagementsystem NM. Während aber beim Vermittlungssystem S₁ alle paketorientierten Interfaces IF₁...IFₙ aktiv sind, sind beim Vermittlungssystem S_{1b} hingegen die paketorientierten Interfaces im Betriebzustand "idle". Der Zustand "idle" bedeutet, dass die Interfaces keinen vermittlungstechnischen Nachrichtenaustausch erlauben, aber von außen, d.h. durch eine außerhalb von Vermittlungssystem S₁ und Vermittlungssystem S_{1b} gelegenen, übergeordneten realzeitfähigen Monitor aktiviert werden können. Der Monitor kann in Hardware und/oder Software realisiert sein, und schaltet im Fehlerfall in Realzeit auf den Klon um. Realzeit bedeutet hier eine Zeitspanne von wenigen Sekunden. Abhängig von der Qualität des Netzes kann auch eine höhere Zeitspanne zur Erkennung der Notwendigkeit zur Ersatzschaltung definiert werden. Gemäss vorliegendem Ausführungsbeispiel ist der Monitor als Steuereinrichtung SC und aus Sicherheitsgründen gedoppelt (lokale Redundanz) ausgebildet.

Die Interfaces In sind paketbasiert und stellen somit Kommunikationsschnittstellen zu paketbasierten Peripherieeinrichtungen (wie z. B. IAD, SIP Proxy-Einrichtungen), fernen paketbasierte Switches (Sₓ), paketbasierten Media Gateways und Servern (MG/ AGW) dar. Sie werden sie mittelbar von der Steuereinrichtung SC (Switch Controller, SC) gesteuert. Dies bedeutet, dass die Steuereinrichtung SC die Interfaces IFₙ über die zentralen Steuerungen CP aktivieren und deaktivieren, und somit beliebig zwischen den Betriebszuständen "act" und "idle" hin- und herschalten kann.

Die Konfiguration gemäss der Fig. 1 soll als Default Konfiguration gelten. Dies bedeutet, dass Vermittlungssystem S₁ vermittlungstechnisch aktiv ist, während sich Vermittlungssystem S_{1b} in einem Betriebszustand "hot standby" befindet. Dieser Zustand ist durch eine aktuelle Datenbasis und volle Aktivität aller Komponenten bis auf die paketbasierten Interfaces (und eventuell die Bearbeitung vermittlungstechnischer Anreize) geprägt. Das (geographisch redundante) Vermittlungssystem S_{1b} kann somit von der Steuereinrichtung SC durch Aktivierung der Interfaces IF_{2..n} schnell (Realzeit) in den vermittlungstechnisch aktiven Zustand überführt werden. Als wesentlicher Aspekt ist anzusehen, dass die beiden geographisch redundanten Vermittlungssyteme S₁, S_{1b} sowie das Netzwerkmanagement NM und die gedoppelte Steuereinrichtung SC jeweils räumlich deutlich getrennt sein müssen.

Die Steuereinrichtung SC übermittelt dem Netzwerkmanagement NM regelmässig oder bedarfsweise auf Anforderung den aktuellen Betriebszustand der Vermittlungssysteme S₁ und S_{1b} (act/ standby, Zustand der Interfaces) sowie den eigenen Betriebszustand. Aus Sicherheitsgründen sollte das Netzwerkmanagement NM die Funktion haben, die oben beschriebenen Umschaltungen auch manuell herbeiführen zu können. Optional kann die automatische Umschaltung blockiert werden, so dass die Umschaltung nur manuell durchgeführt werden kann.

Die Paket-Adressen (IP Adressen) der Interfaces IF₁...IFₙ des Vermittlungssystems S₁ und ihrer jeweiligen Partner Interfaces von Vermittlungssystem S_{1b} können identisch sein, müssen es aber nicht. Wenn sie identisch sind, wird das Umschalten nur von vorgeschalteten Routern bemerkt. Für die Partner-Applikation im Netz ist es dagegen völlig transparent. Man spricht in diesem Zusammenhang auch von der IP Failover Funktion. Falls das Protokoll, das ein Interface bedient, ein Umschalten des Kommunikationspartners auf eine andere Paket-Adresse erlaubt, wie dies z.B. beim H.248 Protokoll der Fall ist (ein Media Gateway kann selbständig eine neue Verbindung zu einem anderen Media Gateway Controller mit anderer IP Adresse herstellen), können die IP Adressen auch unterschiedlich sein.

In einer Ausgestaltung der Erfindung wird vorgesehen, als Steuereinrichtung SC den Zentralrechner eines weiteren Vermittlungssystems zu verwenden. Damit existiert dann eine Steuereinrichtung mit höchster Verfügbarkeit.

In einer Weiterbildung der Erfindung kommt die Etablierung einer unmittelbaren Kommunikationsschnittstelle zwischen Vermittlungssystem S₁ und Vermittlungssystem S_{1b} in Betracht. Diese kann zum Update der Datenbasis z. B. im Hinblick auf SCI -(Subscriber Controlled Input) und Gebühren-Daten genutzt werden sowie auch zum Austausch transienter Daten von einzelnen Verbindungen oder wesentlichen weiteren transienten Daten (z. B. H.248 Association Handle). Damit sind die Störungen des Betriebs aus Teilnehmer- und Betreibersicht minimierbar. Die semipermanenten und transienten Daten können dann von dem jeweiligen aktiven Vermittlungssystem in das redundante standby Vermittlungssystem in einem zyklischen Zeitraster (Update) übertragen werden. Das Update der SCI-Daten hat den Vorteil, dass das zyklische Restore auf dem standby-System vermieden wird und jederzeit Aktualität bzgl. SCI Daten im standby System herrscht. Durch das Update Stack-relevanter Daten, wie dem H.248 association handle, kann der Peripherie die Übernahme der Peripherie durch ein Ersatzsystem verborgen werden, und es können die Ausfallzeiten noch stärker reduziert werden.
Im folgenden sei nun von einem schwerwiegenden Ausfall des Vermittlungssystems S₁ ausgegangen. Aufgrund der geographischen Redundanz ist mit hoher Wahrscheinlichkeit der Klon (Vermittlungssystem S_{1b}) ebenso nicht betroffen wie die Steuereinrichtung SC. Die Steuereinrichtung SC stellt den Ausfall von Vermittlungssystem S₁ fest, da deren Zentralsteuerung CP über eine feste vordefinierte Mehrzahl von Interfaces des Vermittlungssystems S₁ nicht mehr erreicht werden kann und damit Kommunikationsverlust zur Zentralsteuerung CP des Vermittlungssystems S₁ eintritt.

Die Steuereinrichtung SC schaltet nun auf das Bemerken des Ausfalls von Vermittlungssystem S₁ hin das geographisch redundante Vermittlungssystem S_{1b} in einen aktiven Betriebszustand. Das ausgefallenen Vermittlungssystem geht nach Reparatur/ recovery in den "Betriebszustand "hot standby". Gegebenenfalls sind manuelle Eingriffe nötig, um beim Hochfahren von Vermittlungssystem S₁ die aktuelle Datenbasis von Vermittlungssystem S_{1b} zu laden. Das Umschalten kann jederzeit auch vom Network Management System NM aus manuell durchgeführt werden.

Bei vorliegendem Ausführungsbeispiel gemäss der in Fig. 1 aufgezeigten Struktur wird davon ausgegangen, dass die Vermittlungssysteme S₁ und S_{1b} ausschliesslich IP Interfaces aufweisen, Terminierung von TDM-Strecken am Vermittlungssystem sind nicht vorgesehen. Vermittlungssystem S₁ und S_{1b} sind beispielhaft über jeweils genau 2 IP Interfaces IF₁, IF₂ mit der Steuereinrichtung SC verbunden. Damit dürfte eine hinreichende Redundanz gegeben sein, obwohl diese Verbindung bis auf alls n Interfaces ausdehnbar ist. Die Steuereinrichtung SC selbst ist aufgrund ihrer Doppelung ausfallsicher.

Beim Hochlauf wird von der Steuereinrichtung SC (Default Konfiguration)) das Vermittlungssystem S₁ als vermittlungstechnisch "aktiv" und das Vermittlungssystem S_{1b} als vermittlungstechnisch "standby" definiert, die Vermittlungssysteme S₁ und S_{1b} werden hiervon explizit informiert. Als Folge hiervon wird von der zentralen Steuereinrichtung CP des Vermittlungssystems S₁ alle n > 2 Interfaces IFₙ in den vermittlungstechnisch aktiven Zustand versetzt, wohingegen alle n > 2 Interfaces IFₙ des Vermittlungssystems S_{1b} von dessen zentraler Steuereinrichtung CP im Zustand "IDLE" belassen werden. Vermittlungssystem S_{1b} meldet sich unter den ihm zugedachten externen vermittlungstechnisch nutzbaren IP-Adressen erst gar nicht beim Edge-Router (für IP fail-over Adressen und/oder non-fail-over Adressen) oder reagiert nicht auf Eingaben aus der Peripherie, also Gateways, IADs, usw. (für non-fail-over Adressen).

Der Betriebszustand der beiden Vermittlungssysteme S₁ und S_{1b} wird über den Austausch zyklischer Testnachrichten zwischen der Steuereinrichtung SC und den zentralen Steuerungen CP der beiden paarweise angeordneten Vermittlungssysteme S₁, S_{1b} überwacht. Der Austausch der zyklischen Testnachrichten zwischen der Steuereinrichtung SC und der zentralen Steuerung CP des aktiven Vermittlungssystems S₁ erfolgt dadurch, dass sich das aktive Vermittlungssystem S₁ mit Unterstützung seiner zentralen Steuerung CP zyklisch bei der Steuereinrichtung SC meldet und daraufhin eine positive Quittung (z. b. alle 10s) erhält. Der Austausch der zyklischen Testnachrichten zwischen der Steuereinrichtung SC und der zentralen Steuerung CP des hot-standby Vermittlungssystems S_{1b} erfolgt, indem sich das hot-standby Vermittlungssystem S_{1b} mit Unterstützung seiner zentralen Steuerung CP zyklisch bei der Steuereinrichtung SC meldet und daraufhin keine oder eine negative Quittung (z. b. alle 10s) erhält.

Vermittlungssystem S₁ soll nun ausfallen. Die Steuereinrichtung SC (falls intakt) meldet jeden verifizierten, unzulässig lange währenden Kommunikationsverlust mit der Zentralsteuerung CP des Vermittlungssystems 1 an das Netzwerkmanagement NM, wozu beide Interfaces IF1, IF2 herangezogen werden. Ferner gibt sie Vermittlungssystem S_{1b} den Auftrag zur Inbetriebnahme, indem sie die zentrale Steuereinrichtung CP des Vermittlungssystems S_{1b} über mindestens eines der Interfaces IF1, IF2 veranlasst, seine vermittlungstechnischen Interfaces zu aktivieren. Da die Steuereinrichtung SC die Verfügbarkeit von Vermittlungssystem S_{1b} in der Vergangenheit überwacht hat, und dieses nicht gestört zu sein scheint, kann dies umgehend erfolgen.

Das Aktivieren der Interfaces von Vermittlungssystem S_{1b} erfolgt, indem die Steuereinrichtung SC die zyklischen Requests von Vermittlungssystem S_{1b} positiv quittiert. Die zentrale Steuerung CP des Vermittlungssystems S_{1b} schaltet daraufhin die Interfaces IFₙ explizit in den vermittlungstechnisch aktiven Zustand. Ferner quittiert die Steuereinrichtung SC zukünftige Requests von Vermittlungssystem S₁ negativ oder lässt sie unquittiert , womit die zentrale Steuerung CP das Vermittlungssystem S₁ explizit die Interfaces IFₙ in den vermittlungstechnisch inaktiven Zustand schaltet, was auch nach der Wiederinbetriebnahme nach Reparatur sofort erfolgt.

Die IP-fail-over Adressen von Vermittlungssystem S₁ werden nun den vorgelagerten Routern bekannt gemacht. Gleiches gilt für externe non-fail-over Adressen, sofern noch nicht geschehen. Die über die Router eintreffende externe Signalisierung wird fortan durch Vermittlungssystem S_{1b} bearbeitet.

Geht der Fehler auf eine Kommunikationsstörung zwischen Vermittlungssystem S₁ und der Steuereinrichtung SC zurück, so detektiert Vermittlungssystem S₁ die Nichtverfügbarkeit der Steuereinrichtung SC und geht davon aus, dass die Steuereinrichtung SC auf Vermittlungssystem S_{1b} umschaltet. Damit deaktiviert Vermittlungssystem S₁ seine Interfaces aufgrund des Kommunikationsverlustes zur Steuereinrichtung SC automatisch. Hierdurch ist gewährleistet, dass jeweils nur eines der beiden Vermittlungssysteme S₁ und S_{1b} aktiv ist.

Nach der Reparatur oder Wiederverfügbarkeit der Kommunikation zwischen der Steuereinrichtung SC und Vermittlungssystem S₁ kann wieder auf Vermittlungssystem S₁ zurückgeschaltet werden. Dies ist jedoch nicht zwingend erforderlich, kann aber optional unterstützt werden.

Um auszuschließen, dass ein Kommunikationsverlust zwischen der Steuereinrichtung SC zu Vermittlungssystem S₁ und Vermittlungssystem S_{1b} einen Totalausfall beider Vermittlungssysteme S₁ und S_{1b} verursacht, wird das Netzwerkmanagement NM stets von der Steuereinrichtung SC und den Vermittlungssystemen über eine Ersatzschaltung und die bevorstehende Abschaltung eines Vermittlungssystems informiert und kann dies gegebenenfalls unterbinden. Auch kann ein Bestätigungsmodus für den Bediener an das Netzwerkmanagement NM optional angeboten werden.

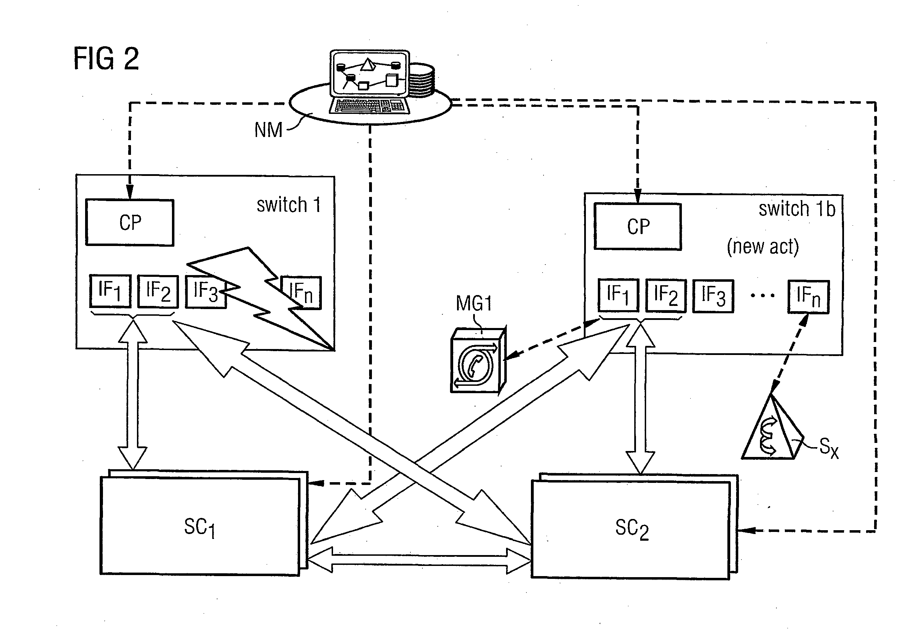

Dasselbe Ausfallszenario bezüglich der Vermittlungssysteme soll nun auf einer in Fig. 2 aufgezeigten Konfiguration zum Ablauf gelangen. Der Unterschied zu der in Fig. 1 aufgezeigten Konfiguration liegt im Vorsehen zweier Steuereinrichtungen SC₁ und SC₂, die an verschiedenen Orten untergebracht sind. Die Steuereinrichtung SC besteht somit aus den beiden Hälften SC₁ und SC₂.

Gemäss Fig. 2 überwachen sich die beiden (räumlich getrennten) Steuereinrichtungen SC₁ und SC₂ gegenseitig. Fällt die Kommunikation zwischen den beiden Steuereinrichtungen SC₁ und SC₂ aus, so gibt es keine von einer Steuereinrichtung ausgehenden automatischen Ersatzschalteaufträge mehr. Während der Isolation der beiden Steuereinrichtungen SC₁ und SC₂ wird der zuletzt in den beiden Steuereinrichtungen SC₁ und SC₂ festgelegte Betriebszustand der Vermittlungssysteme aufrecherhalten. Dies ist möglich, da die beiden Steuereinrichtungen SC₁ und SC₂ noch getrennt aktiv sind. Das schließt aus, dass beide Steuereinrichtungen SC₁ und SC₂ unabhängig voneinander inkonsistente Einstellungen der Vermittlungssysteme S₁ und S_{1b} vornehmen. Die Zentralteile CP der Vermittlungssysteme S₁ und S_{1b} stehen mit beiden Steuereinrichtungen SC₁ und SC₂ in Kontakt und erhalten von Steuereinrichtung SC₁ und SC₂ explizit Aufträge zur Aktivierung bzw. Deaktivierung ihrer Interfaces. Diese Aufträge sind konsistent, da sich die beiden Steuereinrichtungen SC₁ und SC₂ diesbezüglich vorher synchronisiert haben.

Fällt nun Vermittlungssystem S₁ aus, so stellt dies Steuereinrichtung SC₁ und SC₂ fest. Beide synchronisieren sich und schalten Vermittlungssystem S_{1b} ein. Kommt Vermittlungssystem S₁ danach wieder in Betrieb, so wird dies wiederum von Steuereinrichtung SC₁ und SC₂ bemerkt und nach erfolgter interner Synchronisation geht Vermittlungssystem S₁ in den von Steuereinrichtung SC₁ und SC₂ veranlassten standby-Zustand.

War nur die Kommunikation zwischen Steuereinrichtung SC₁ und Vermittlungssystem S₁ gestört, wurde das ebenfalls durch die beiden Steuereinrichtungen SC₁ und SC₂ erkannt, und es wurde auf eine Ersatzschaltung verzichtet.

War die Kommunikation zwischen Vermittlungssystem S₁ und beiden zwei Steuereinrichtungen SC₁ und SC₂ gestört, so haben beide Steuereinrichtungen Vermittlungssystem S_{1b} aktiviert. Vermittlungssystem S₁ deaktivierte sich hierbei durch den Kommunikationsverlust mit beiden Steuereinrichtungen SC₁ und SC₂ selbst.

Fällt Steuereinrichtung SC₁ aus, so stellt sich das als eine Kommunikationsstörung zwischen beiden Steuereinrichtungen SC₁ und SC₂ dar. Hierauf unternimmt Steuereinrichtungen SC₂ keine weiteren Ersatzschaltungen mehr, da dann die Gefahr bestünde, dass Steuereinrichtung SC₁ ebenfalls Vermittlungssystem S₁ und Vermittlungssystem S_{1b} inkonsistent zu den Einstellungen von Steuereinrichtung SC₂ einstellt. Da weiterhin Kontakt zu SC2 besteht, schaltet sich Vermittlungssystem lb nicht ab.

Der Vorteil dieser Konfiguration liegt in einer erhöhten Sicherheit, insbesondere bei automatischer Abschaltung eines isolierten Vermittlungssystemes.

## Patentansprüche

1. Verfahren zum Ersatzschalten von räumlich getrennten Vermittlungssystemen, die in einer 1:1 Redundanz paarweise angeordnet sind,
wobei das eine Vermittlungssystem (S₁) sich in einem aktiven Betriebszustand und das verbleibende redundante Vermittlungssystem (S_{1b}) sich in einem hot-standby Betriebszustand befindet
wobei das eine Vermittlungssystem (S₁) und das redundante Vermittlungssystem (S_{1b}) beide über paketorientierte Interfaces verfügen und
wobei die paketorientierten Interfaces des redundanten Vermittlungssystems (S_{1b}) in einem Betriebszustand ("idle") sind, in welchem die Interfaces keinen vermittlungstechnischen Nachrichtenaustausch erlauben,
bei dem eine Kommunikation zwischen mindestens einem übergeordneten Monitor (SC) und mindestens einem der paarweise angeordneten Vermittlungssysteme (S₁, S_{1b}) aufgebaut wird, wobei der mindestens eine übergeordnete Monitor (SC) ein übergeordneter realzeitfähiger Monitor ist und außerhalb des einen Vermittlungssystems (S₁) und des redundanten Vermittlungssystems (S_{1b}) liegt,
bei dem bei Kommunikationsverlust zu dem aktiven Vermittlungssystem (S₁) mit Unterstützung der zentralen Steuerung (CP) des redundanten Vermittlungssystems (S_{1b}) auf dieses in Realzeit umgeschaltet wird,
bei dem die paketorientierten Interfaces des redundanten Vermittlungssystems (S_{1b}) in dem Betriebszustand, in welchem die Interfaces keinen vermittlungstechnischen
Nachrichtenaustausch erlauben, durch den mindestens einen übergeordneten Monitor (SC) aktiviert werden.

2. Verfahren nach Anspruch 1,
**dadurch gekennzeichnet**,
dass zwischen dem mindestens einem übergeordneten Monitor (SC) und den zentralen Steuerungen (CP) der beiden paarweise angeordneten Vermittlungssysteme (S₁, S_{1b}) zyklisch Testnachrichten ausgetauscht werden.

3. Verfahren nach Anspruch 1, 2,
**dadurch gekennzeichnet**,
dass der Austausch der zyklischen Testnachrichten zwischen dem übergeordneten Monitor (SC) und der zentralen Steuerung (CP) des aktiven Vermittlungssystems (S₁) gesteuert wird, indem sich das aktive Vermittlungssystem (S₁) mit Unterstützung seiner zentralen Steuerung (CP) zyklisch beim Monitor (SC) meldet und daraufhin eine positive Quittung (z. B. alle 10s) erhält.

4. Verfahren nach Anspruch 1 bis 3,
**dadurch gekennzeichnet**,
dass der Austausch der zyklischen Testnachrichten zwischen dem übergeordneten Monitor (SC) und der zentralen Steuerung (CP) des hot-standby Vermittlungssystems (S_{1b}) gesteuert wird, indem sich das hot-standby Vermittlungssystem (S_{1b}) mit Unterstützung seiner zentralen Steuerung (CP) zyklisch beim Monitor (SC) meldet und daraufhin keine oder eine negative Quittung (z. b. alle 10s) erhält.

5. Verfahren nach Anspruch 1 bis 4,
**dadurch gekennzeichnet**,
dass der verifizierte Kommunikationsverlust zur vermittlungstechnisch aktiven Vermittlungsstelle vom Monitor (SC) an das Netzwerkmanagement (NM) gemeldet wird, das daraufhin nach Massgabe der Verfügbarkeit von Vermittlungssystem (S_{1b}) Umschaltebefehle an den mindestens einen Monitor (SC) sendet.

6. Verfahren nach Anspruch 1, 2 oder 3,
**dadurch gekennzeichnet**,
dass das Umschalten auf das redundante Vermittlungssystem (S_{1b}) vom Monitor (SC) gesteuert wird, indem er die zyklischen Anforderungen ("Request") des hot-standby Vermittlungssystems (S_{1b}) mit einer positiver Quittung quittiert, woraufhin dieses Vermittlungssystem (S_{1b}) von seiner zentralen Steuerung (CP) explizit in den vermittlungstechnisch aktiven Zustand gesteuert wird.

7. Verfahren nach einem der vorstehenden Ansprüche,
**dadurch gekennzeichnet**,
dass nach Behebung des Kommunikationsverlustes ein automatisches Rückschalten auf die vor dem Kommunikationsverlust bestehende Konfiguration nicht vorgenommen wird.

8. Monitor zum Überwachen und Schalten von Vermittlungssystemen,
der derart ausgebildet ist, dass er das Verfahren nach einem der vorstehenden Ansprüche unterstützt.

9. Monitor nach Anspruch 8,
der in mindestens zwei räumlich getrennte Teile aufgeteilt ist, und der bei Ausfall eines Vermittlungssystems in Realzeit auf ein redundant zugeordnetes Vermittlungssystem umschaltet.

10. Monitor nach Anspruch 9,
**dadurch gekennzeichnet**,
dass sich die mindestens beiden Teile (SC₁ und SC₂) des Monitors (SC) gegenseitig überwachen,
dass eine Kommunikationsstörung zwischen einem der mindestens beiden Teile und dem jeweils aktiven Vermittlungssystem (S₁) Anlaß dafür ist,
dass die mindestens beiden Teile (SC₁ und SC₂) sich hieraufhin gegenseitig synchronisieren und das redundante Vermittlungssystem (S_{1b}) aktivieren oder nicht aktivieren.

11. Monitor nach Anspruch 9 oder 10,
**dadurch gekennzeichnet**,
dass im Falle einer Kommunikationsstörung zwischen den mindestens beiden Teilen (SC₁, SC₂) selbst der zuletzt in den mindestens beiden Teilen (SC₁, SC₂) festgelegte Betriebszustand der Vermittlungssysteme (S₁, S_{1b}) aufrechterhalten wird.

## Claims

1. Method for the equivalent switching of spatially separated switching systems which are arranged in pairs with a 1:1 redundancy,
one switching system (S₁) being in an active operating state and the remaining, redundant switching system (S_{1b}) being in a hot-standby operating state,
the one switching system (S₁) and the redundant switching system (S_{1b}) both having packet-oriented interfaces, and
the packet-oriented interfaces of the redundant switching system (S_{1b}) being in an operating state ("idle") in which the interfaces do not allow any switching technology related messages to be interchanged,
in which communication is established between at least one superordinate monitor (SC) and at least one of the switching systems (S₁, S_{1b}) arranged in pairs,
the at least one superordinate monitor (SC) being a superordinate monitor with real-time capability and being outside the one switching system (S₁) and the redundant switching system (S_{1b}),
in which, in the event of a loss of communication to the active switching system (S₁), there is a changeover to the redundant switching system in real time with the assistance of the central controller (CP) of the redundant switching system (S_{1b}),
in which the packet-oriented interfaces of the redundant switching system (S_{1b}) are activated by the at least one superordinate monitor (SC) in the operating state in which the interfaces do not allow any switching technology related messages to be interchanged.

2. Method according to Claim 1,
**characterized in that**
test messages are cyclically interchanged between the at least one superordinate monitor (SC) and the central controllers (CP) of the two switching systems (S₁, S_{1b}) arranged in pairs.

3. Method according to Claims 1 and 2,
**characterized in that**
the interchange of the cyclical test messages between the superordinate monitor (SC) and the central controller (CP) of the active switching system (S₁) is controlled by virtue of the active switching system (S₁) cyclically registering with the monitor (SC) with the assistance of its central controller (CP) and then receiving a positive acknowledgement (for example every 10 s).

4. Method according to Claims 1 to 3,
**characterized in that**
the interchange of the cyclical test messages between the superordinate monitor (SC) and the central controller (CP) of the hot-standby switching system (S_{1b}) is controlled by virtue of the hot-standby switching system (S_{1b}) cyclically registering with the monitor (SC) with the assistance of its central controller (CP) and then not receiving an acknowledgement or receiving a negative acknowledgement (for example every 10 s).

5. Method according to Claims 1 to 4,
**characterized in that**
the verified loss of communication to the switching centre which is active in terms of switching is reported by the monitor (SC) to the network management (NM) which then transmits changeover commands to the at least one monitor (SC) according to the availability of the switching system (S_{1b}).

6. Method according to Claim 1, 2 or 3,
**characterized in that**
the changeover to the redundant switching system (S_{1b}) is controlled by the monitor (SC) by acknowledging the cyclical requests from the hot-standby switching system (S_{1b}) with a positive acknowledgement, whereupon this switching system (S_{1b}) is explicitly controlled into the state which is active in terms of switching by its central controller (CP).

7. Method according to one of the preceding claims,
**characterized in that**
there is no automatic switching back to the configuration existing before the loss of communication after the loss of communication has been rectified.

8. Monitor for monitoring and switching switching systems,
which is designed in such a manner that it supports the method according to one of the preceding claims.

9. Monitor according to Claim 8,
which is divided into at least two spatially separated parts and which changes over to a redundantly assigned switching system in real time when one switching system fails.

10. Monitor according to Claim 9,
**characterized in that**
the at least two parts (SC₁ and SC₂) of the monitor (SC) monitor one another,
**in that** a communication disturbance between one of the at least two parts and the respectively active switching system (S₁) is reason for
the at least two parts (SC₁ and SC₂) to synchronize with one another in response to this and to activate or not activate the redundant switching system (S_{1b}).

11. Monitor according to Claim 9 or 10,
**characterized in that**
in the event of a communication disturbance between the at least two parts (SC₁, SC₂) themselves, the operating state of the switching systems (S₁, S_{1b}) which was last determined in the at least two parts (SC₁, SC₂) is maintained.

## Revendications

1. Procédé permettant d'effectuer une commutation de remplacement entre des systèmes de commutation séparés dans l'espace qui sont appariés avec une redondance de 1:1, l'un système de commutation (S₁) étant dans un état de fonctionnement actif et le système de commutation redondant restant (S_{1b}) étant dans un état de fonctionnement de secours automatique, l'un système de commutation (S₁) et le système de commutation redondant (S_{1b}) disposant tous deux d'interfaces orientées paquets et les interfaces orientées paquets du système de commutation redondant (S_{1b}) étant dans un état de fonctionnement (« idle ») dans lequel les interfaces ne permettent pas d'échange de messages en termes de technique de commutation,
selon lequel une communication est établie entre au moins un moniteur hiérarchiquement supérieur (SC) et au moins l'un des systèmes de commutation appariés (S₁, S_{1b}),
l'au moins un moniteur hiérarchiquement supérieur (SC) étant un moniteur hiérarchiquement supérieur apte au temps réel et étant situé en dehors de l'un système de commutation (S₁) et du système de commutation redondant (S_{1b}),
selon lequel a lieu, en cas de perte de communication avec le système de commutation actif (S₁), une commutation en temps réel, à l'aide de la commande centrale (CP) du système de commutation redondant (S_{1b}), sur celui-ci,
selon lequel les interfaces orientées paquets du système de commutation redondant (S_{1b}) sont, dans l'état de fonctionnement dans lequel les interfaces ne permettent pas d'échange de messages en termes de technique de commutation, activées par l'au moins un moniteur hiérarchiquement supérieur (SC).

2. Procédé selon la revendication 1, **caractérisé en ce que** des messages de test sont échangés cycliquement entre l'au moins un moniteur hiérarchiquement supérieur (SC) et les commandes centrales (CP) des deux systèmes de commutation appariés (S₁, S_{1b}).

3. Procédé selon la revendication 1, 2, **caractérisé en ce que** l'échange des messages de test cycliques entre le moniteur hiérarchiquement supérieur (SC) et la commande centrale (CP) du système de commutation actif (S₁) est commandé par le fait que le système de commutation actif (S₁) se connecte cycliquement au moniteur (SC) à l'aide de sa commande centrale (CP) et reçoit ensuite une confirmation positive (par exemple, toutes les 10 secondes).

4. Procédé selon la revendication 1 à 3, **caractérisé en ce que** l'échange des messages de test cycliques entre le moniteur hiérarchiquement supérieur (SC) et la commande centrale (CP) du système de commutation en état de fonctionnement de secours automatique (S_{1b}) est commandé par le fait que le système de commutation en état de fonctionnement de secours automatique (S_{1b}) se connecte cycliquement au moniteur (SC) à l'aide de sa commande centrale (CP) et ne reçoit ensuite pas de confirmation ou reçoit une confirmation négative (par exemple, toutes les 10 secondes).

5. Procédé selon la revendication 1 à 4, **caractérisé en ce que** la perte de communication vérifiée avec le centre de commutation actif en termes de technique de commutation est signalée par le moniteur (SC) à la gestion de réseau (NM) qui envoie ensuite des ordres de commutation à l'au moins un moniteur (SC) en fonction de la disponibilité du système de commutation (S_{1b}).

6. Procédé selon la revendication 1, 2 ou 3, **caractérisé en ce que** la commutation sur le système de commutation redondant (S_{1b}) est commandée par le moniteur (SC) par le fait qu'il confirme par une confirmation positive les requêtes cycliques (« Request ») du système de commutation en état de fonctionnement de secours automatique (S_{1b}), ce système de commutation (S_{1b}) étant ensuite explicitement mis à l'état actif en termes de technique de commutation par sa commande centrale (CP).

7. Procédé selon l'une des revendications précédentes, **caractérisé en ce que**, après une remédiation à la perte de communication, un retour automatique à la configuration qui existait avant la perte de communication n'est pas effectuée.

8. Moniteur de surveillance et de commutation de systèmes de commutation, réalisé de manière telle qu'il supporte le procédé selon l'une des revendications précédentes.

9. Moniteur selon la revendication 8, lequel est réparti en au moins deux parties séparées dans l'espace et commute en temps réel, en cas de défaillance d'un système de commutation, sur un système de commutation associé de manière redondante.

10. Moniteur selon la revendication 9, **caractérisé en ce que** les au moins deux parties (SC₁ et SC₂) du moniteur (SC) se surveillent mutuellement, **en ce qu'**une perturbation de la communication entre l'une des au moins deux parties et le système de commutation respectivement actif (S₁) y donne lieu et **en ce que** les au moins deux parties (SC₁ et SC₂) se synchronisent ensuite mutuellement et activent ou n'activent pas le système de commutation redondant (S_{1b}).

11. Moniteur selon la revendication 9 ou 10, **caractérisé en ce que**, en cas de perturbation de la communication entre les au moins deux parties (SC₁, SC₂) elles-mêmes, l'état de fonctionnement des systèmes de commutation (S₁, S_{1b}) déterminé en dernier lieu dans les au moins deux parties (SC₁, SC₂) est maintenu.
